# EUROPÄISCHE PATENTSCHRIFT

(11) **EP 1 796 928 B1**
(45) Veröffentlichungstag und Bekanntmachung des Hinweises auf die Patenterteilung: **04.03.2009**
(21) Anmeldenummer: 05798033.6
(22) Anmeldetag: 05.10.2005
(51) Int. Cl.: B60J 3/00, C03C 17/00

(54) **FAHRZEUGVERLASUNG MIT ABGEDUNKELTEN BEREICHEN**
VEHICLE GLAZING WITH DARKENED AREAS
VITRAGE DE VEHICULE, A ZONES RENDUES PLUS SOMBRES

(30) Priorität: 05.10.2004 DE 102004048469
(43) Veröffentlichungstag der Anmeldung: 20.06.2007
(73) Patentinhaber: Webasto AG, 82131 Stockdorf (DE)
(72) Erfinder: GERL, Tobias, 80805 München (DE); KOCH, Robert, 86853 Langerringen (DE); HARNISCHFEGER, Bernhard, 85221 Dachau (DE)
(86) Internationale Anmeldenummer: PCT/DE2005/001788
(87) Internationale Veröffentlichungsnummer: WO 2006/037315

(56) Entgegenhaltungen:
- DE-A1- 19 500 779
- FR-A- 2 850 326
- JP-A- 60 050 022
- US-A- 4 528 232
- US-A- 5 324 568

## Beschreibung

Die Erfindung betrifft eine Fahrzeugverglasung, insbesondere ein Glasdach eines Kraftfahrzeugs, mit den Merkmalen gemäß dem Oberbegriff des Patentanspruches 1.

Eine derartige Fahrzeugverglasung ist aus der US 5 324 568 A bekannt und beispielsweise als Glasdach eines als Coupe oder Limousine ausgebildeten Personenkraftwagens ausgeführt. Aus dekorativen Gründen ist es hierbei häufig erwünscht, einen großen Teil des Scheibenkörpers insbesondere in zentralen Bereichen opak zu gestalten. Dadurch können für einen außerhalb des Fahrzeugs befindlichen Betrachter beispielsweise Karosseriebauteile oder auch sonstige funktionelle Baugruppen, wie ein Schiebedachrahmen oder dergleichen, verdeckt werden. Zu diesen Zwecken ist der Glaskörper zur Schließung transparenter Bereiche mit einer Abdunkelung versehen.

Zur Abdunkelung wird der Glaskörper, der in der Regel aus einem Einscheibensicherheitsglas (ESG) gebildet ist, bisher beispielsweise in den betreffenden Bereichen mit einer Emailfarbe bzw. Glasfritte bedruckt. Die Bedruckung, die vollflächig oder auch nach einem Punktmuster durchgeführt werden kann, erfolgt vor einem thermischen Härteprozess, dem der Glaskörper vor seiner Nutzung als Verglasung eines Kraftfahrzeugs ausgesetzt wird. Die Glasfritte verschmilzt bei dem Härteprozess, der beispielsweise bei 480 °C erfolgt, mit dem ein Trägermaterial darstellenden Glaskörper.

Die Nutzung einer Glasfritte hat jedoch den Nachteil, dass die Emailfarbe auf der Oberfläche des Glaskörpers dessen Widerstandsfähigkeit in bedruckten Bereichen verringert. Da die Glasfritte aufgrund gesetzlicher Vorschriften auch kein Blei mehr enthalten darf, ist dieser Effekt besonders ausgeprägt. Bei einer vollflächigen Bedruckung des Glaskörpers oder bei einer großflächigen Bedruckung mit einem Muster, beispielsweise mit einem Punktraster, wird der Glaskörper derart geschwächt, dass beispielsweise bei Steinschlag eine erhöhte Bruchgefahr besteht, was bei Glaskörpern, die eine geringe Dicke aufweisen, in besonderem Maße zutrifft. Die Anforderungen bei einer vorgeschriebenen Kugelfallprobe können nicht mehr erfüllt werden.

Alternativ ist es bekannt, die Abdunkelung durch eine flächige Unterschäumung des Glaskörpers mit einem Polyurethanschaum, durch Aufbringen einer Folie oder auch durch Aufbringen eines dunklen Bauteils herzustellen, das beispielsweise aus geschwärztem Blech oder geschwärztem Kunststoff besteht. Bei einer flächigen Unterschäumung des Glaskörpers mit Polyurethanschaum wird durch eine beim Abkühlen des Schaums erfolgende Schrumpfung eine Vorspannung in den Glaskörper eingebracht, welche ebenfalls zu einer erhöhten Bruchgefahr und auch zu einer Wölbungsbeeinflussung führen kann. Wenn die Abdunkelung aus einer Folie gebildet ist, besteht der Nachteil, dass sich die Folie im Laufe der Zeit teilweise lösen kann. Verfahren, nach denen die Folie so aufgebracht werden kann, dass ein späteres Lösen unterbunden wird, sind sehr aufwendig und kostenintensiv. Auch das Aufbringen eines zusätzlichen, nicht reflektierenden, dunklen Bauteils ist mit erheblichem Aufwand und somit auch mit hohen Kosten verbunden.

Der Erfindung liegt die Aufgabe zugrunde, eine zumindest teilweise in zentralen Bereichen opake Fahrzeugverglasung zu schaffen, wobei durch die Ausbildung der opaken Bereiche keine Schwächung des Glaskörpers resultiert.

Diese Aufgabe ist erfindungsgemäß durch die Fahrzeugverglasung mit den Merkmalen des Patentanpruchs 1 gelöst.

Der Kern der Erfindung liegt mithin darin, dass der mit dem Glaskörper vernetzende, opake Stoff derart zur Verdunkelung des Glaskörpers eingesetzt wird, dass die Fahrzeugverglasung in zentralen bzw. vom Glaskörperrand beabstandeten Bereichen undurchsichtig ausgebildet ist. Der mit dem Glaskörper vernetzende Stoff wird hierzu einfach in flüssiger Form auf die betreffenden transparenten, gegebenenfalls großflächigen Bereiche des Glaskörpers aufgetragen. Der mit dem Glaskörper vernetzende Stoff wird also als gut haftende Farbe genutzt, die auf den in der Regel ausgehärteten und damit im Wesentlichen montagefertigen Glaskörper aufgetragen wird. Der zur Verdunkelung des Glaskörpers genutzte Stoff löst dabei die Oberfläche des Glaskörpers leicht an, wobei ein molekulares Vernetzen des Stoffes mit dem Glaskörper erfolgt. Es bildet sich also eine chemische Bindung zwischen dem opaken Stoff und dem Glaskörper aus. Das Vernetzen des Stoffes mit dem Glaskörper kann durch einen Eintrag von Wärme beschleunigt werden. Insbesondere durch das Vernetzen wird eine dauerhaft beständige Beschichtung des Glaskörpers geschaffen.

Eine erfindungsgemäße Fahrzeugverglasung, bei der der Glaskörper beispielsweise aus einem Einscheibensicherheitsglas (ESG) hergestellt ist, kann großflächig undurchsichtig gestaltet sein, wobei die gesetzlichen Sicherheitsvorschriften eingehalten werden können. Das Bruchverhalten des Glaskörpers ändert sich durch den Auftrag des opaken Stoffs nicht.

Bei einer bevorzugten Ausführungsform der Fahrzeugverglasung nach der Erfindung ist der mit dem Glaskörper vernetzende, opake Stoff ein Glasprimer, insbesondere ein schwarzer Glasprimer bzw. Schwarzprimer. Ein Glasprimer stellt einen bisher als Haftgrund auf Glasscheiben eingesetzten Stoff bzw. Haftvermittler dar, der zur Verbesserung der Haftung zwischen Klebesystemen und der Oberfläche des Glaskörpers eingesetzt wird, wobei ein opaker Glasprimer den eingesetzten Klebstoff vor einer Alterung durch einwirkendes Licht schützen kann.

Der Auftrag des mit dem Glaskörper vernetzenden, opaken Stoffs ist kostengünstig und mit einfachen Hilfsmitteln möglich. In der Regel wird der Stoff in flüssiger Form manuell mittels eines Pinsels, eines Wollwischers oder eines Filzes aufgetragen. Alternativ kann der Auftrag natürlich auch automatisiert mittels eines Roboters erfolgen.

Ein als Glasprimer ausgebildeter, mit dem Glaskörper vernetzender, opaker Stoff kann beispielsweise als Bindemittel reaktive Polyisocyanate umfassen. Die Trocknungszeit eines solchen Werkstoffs liegt beispielsweise zwischen 5 und 10 Minuten.

Neben dem Einsatz als Abdunkelung kann der Glasprimer in entsprechenden Bereichen auch als Haftvermittlersystem für eine Verklebung an einer Fahrzeugkarosserie oder auch beim Umschäumen des Glaskörpers in dessen Randbereichen mit Polyurethan oder dergleichen eingesetzt werden.

Die Glasscheibe kann aus technischen Gründen insbesondere im Bereich einer möglichen Verklebung mit einer Glasfritte vorgesehen sein. In den nicht mit der Glasfritte bedruckten Bereichen des Glaskörpers kann dann vollflächig oder auch nur bereichsweise der einen dauerhaft haftenden Flüssigkeitsauftrag darstellende, opake Stoff aufgetragen sein.

Bei einer erfindungsgemäß ausgeführten Fahrzeugverglasung kann der Glaskörper auch eine geringe Dicke, d. h. von beispielsweise etwa 2 mm bis 5 mm, aufweisen, und dabei trotzdem eine hinreichende Bruchsicherheit zur Verfügung stellen.

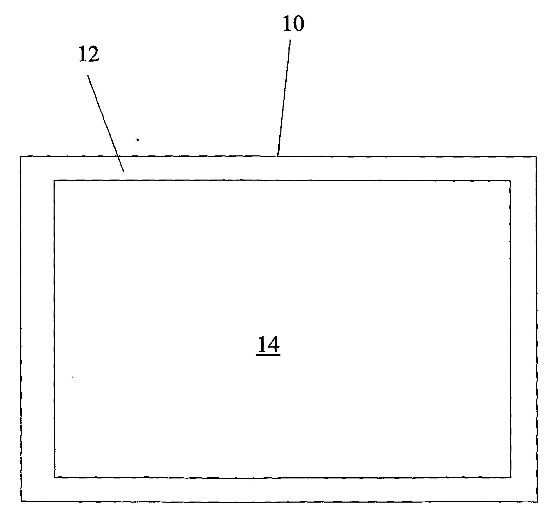

Weitere Vorteile und vorteilhafte Ausgestaltungen der Fahrzeugverglasung nach der Erfindung sind der Beschreibung, der Zeichnung und den Patentansprüchen entnehmbar.

Ein Ausführungsbeispiel einer Fahrzeugverglasung nach der Erfindung ist in der Zeichnung schematisch vereinfacht dargestellt und wird in der nachfolgenden Beschreibung näher erläutert.

Die einzige Figur der Zeichnung zeigt eine bei einem Glasdach eingesetzte Fahrzeugverglasung.

In der Zeichnung ist eine einen Glaskörper 10 umfassende Fahrzeugverglasung dargestellt, die einen Teil eines Glasdaches eines als Limousine ausgebildeten Personenkraftwagens darstellt. Das dargestellte Glasdachteil ist beispielsweise oberhalb des Fondbereichs eines Fahrzeuginnenraums angeordnet.

Der Glaskörper 10, der eine Dicke von etwa 4 mm hat, umfasst einen Randbereich 12, der beispielsweise zur Verklebung der Fahrzeugverglasung 10 mit dem Fahrzeugaufbau dient. Der Randbereich 12 kann mit einer aus Emailfarbe gebildeten Glasfritte versehen sein.

Der Randbereich 12 kann zusätzlich oder alternativ zur Verklebung mit einer aus Polyurethan bestehenden Umschäumung versehen sein.

In einem großflächigen zentralen Bereich 14 ist der Glaskörper 10 an seiner Oberfläche mit einem schwarzen Glasprimer versehen, so dass die Fahrzeugverglasung 10 auch in dem Bereich 14 undurchsichtig bzw. opak ausgestaltet ist.

Alternativ kann der Glaskörper 10 in dem zentralen Bereich 14 auch nur bereichsweise mit dem in flüssiger Form aufgetragenen, schwarzen Glasprimer versehen sein, so dass eine verminderte Durchsicht vorliegt.

### Bezugszeichen

- 10: Glaskörper
- 12: Randbereich
- 14: zentraler Bereich

## Patentansprüche

1. Fahrzeugverglasung, insbesondere Glasdach eines Kraftfahrzeuges, umfassend einen Glaskörper (10), der zur Schließung transparenter, von seinem Randbereich beabstandeter Bereiche (14) mit einer Abdunkelung versehen ist, **dadurch gekennzeichnet, dass** die Abdunkelung aus einem mit dem Glaskörper vernetzenden, opaken Stoff gebildet ist, der auf den Glaskörper (10) aufgetragen ist.

2. Fahrzeugverglasung nach Anspruch 1, **dadurch gekennzeichnet, dass** der mit dem Glaskörper vernetzende, opake Stoff ein Glasprimer, insbesondere ein schwarzer Glasprimer ist.

3. Fahrzeugverglasung nach Anspruch 1 oder 2, **dadurch gekennzeichnet, dass** der Glaskörper (10) im Wesentlichen großflächig oder vollflächig mit dem opaken Stoff beschichtet ist.

4. Fahrzeugverglasung nach einem der Ansprüche 1 bis 3, **dadurch gekennzeichnet, dass** der Glaskörper (10) zumindest in seinen Randbereichen (12) mit einer Glasfritte versehen ist.

5. Fahrzeugverglasung nach einem der Ansprüche 1 bis 4, **dadurch gekennzeichnet, dass** der Glaskörper (10) eine Dicke zwischen etwa 2 mm und 5 mm hat.

## Claims

1. Vehicle glazing, in particular a glass roof of a motor vehicle, comprising a glass body (10) provided with a darkening to obscure transparent regions (14) located at a distance from the edge region of said glass body (10), **characterized in that** the darkening is formed from an opaque material which crosslinks with the glass body and is applied to the glass body (10).

2. Vehicle glazing according to Claim 1, **characterized in that** the opaque material crosslinking with the glass body is a glass primer, in particular a black glass primer.

3. Vehicle glazing according to Claim 1 or 2, **characterized in that** substantially a large area or the whole area of the glass body (10) is coated with the opaque material.

4. Vehicle glazing according to one of Claims 1 to 3, **characterized in that** at least the edge regions (12) of the glass body (10) are provided with a glass frit.

5. Vehicle glazing according to one of Claims 1 to 4, **characterized in that** the glass body (10) has a thickness of between approximately 2 mm and 5 mm.

## Revendications

1. Vitrage pour véhicule, en particulier toit vitré pour véhicule automobile, qui comprend un corps en verre (10) assombri pour fermer des parties transparentes (14) disposées à distance de sa bordure,
**caractérisé en ce que**
l'assombrissement est formé d'une substance opaque qui mouille le corps en verre et qui est appliquée sur le corps en verre (10).

2. Vitrage pour véhicule selon la revendication 1, **caractérisé en ce que** la substance opaque qui mouille le corps en verre est une couche de fond vitreuse et en particulier une couche de fond vitreuse noire.

3. Vitrage pour véhicule selon les revendications 1 ou 2, **caractérisé en ce que** le corps en verre (10) est revêtu de la substance opaque essentiellement sur une grande surface ou sur toute sa surface.

4. Vitrage pour véhicule selon l'une des revendications 1 à 3, **caractérisé en ce qu'**au moins sur ses bordures (12), le corps en verre (10) est doté d'une fritte de verre.

5. Vitrage pour véhicule selon l'une des revendications 1 à 4, **caractérisé en ce que** l'épaisseur du corps en verre (10) est comprise entre environ 2 mm et 5 mm.
